# EUROPEAN PATENT APPLICATION

(11) **EP 2 066 078 A1**
(43) Date of publication of application: **03.06.2009**
(21) Application number: 07022969.5
(22) Date of filing: 27.11.2007
(51) Int. Cl.: H04L 12/28, H04L 12/56, H04W 4/00

(54) **Method for resource assignment signalling in a mobile radio communication system and base station for a mobile radio communication system**

(71) Applicant: Nokia Siemens Networks Oy, 02610 Espoo (FI)
(72) Inventor: Döttling, Martin, Dr., 85579 Neubiberg (DE); Haustein, Thomas, Dr., 81735 München (DE); Luo, Jijun, 81549 München (DE); von Häfen, Jörn, 80993 München (DE)
(74) Representative: Bruglachner, Thomas E.

(57) **Abstract**

The invention relates to a method for resource assignment signalling in a mobile radio communication system, wherein time-frequency resources for data transmission are structured in physical resource blocks, wherein the method comprises the steps of
- assigning resource blocks to active user equipments (S10),
- signalling the resource block assignment to the active user equipments (S12), and
- adapting the signalling of the resource block assignment depending on the actual number of active user equipments (S14-S20).

## Description

The invention relates to a method for resource assignment signalling in a mobile radio communication system according to claim 1 and base station for a mobile radio communication system according to claim 9.

Multi-user channel adaptive scheduling is a technology that promises large capacity gains in mobile radio communication systems. The term mobile radio communication system used herein means any radio communication system enabling mobile radio devices such as mobile phones to communicate. In such a system, communication means any transmission of digital data via radio links between two communication parties, typically a mobile radio device and a base station. The term user equipment (UE) means any mobile radio device, which is adapted to communicate with another device such as a base station via a radio link.

A first implementation of multi-user channel adaptive scheduling based on an update of the UMTS (Universal Mobile Communication System) standard was introduced in 3GPP (3^{rd} Generation Partnership Project) with HSDPA (High Speed Downlink Packet Access). Furthermore, in the design of OFDMA (Orthogonal Frequency Division Multiplexing) based 3GPP LTE (Long Term Evolution) systems, multi-user scheduling in time and frequency was taken into account.

With multi-user channel adaptive scheduling, time-frequency resources are structured in physical resource blocks. A base station of a mobile radio communication system optimises the resource blocks assignment to the user equipments (UEs) according to their actual channel states, QoS (Quality of Service), requested service, delays, buffer states etc. ("channel and queue aware schduling"). The actual resource block assignment needs to be signalled from the base station to the UEs.

Higher granularity of the resource block assignment in time and frequency provides better adaptation to the radio channel, however requires more signalling. As a system gain, e.g. in capacity, can only be achieved if the gain achieved by scheduling exceeds the loss due to the additional required signalling, efficient signalling of the resource assignment is crucial for systems using multi-user-scheduling.

Therefore, it is an object of the present invention to provide a method for resource assignment signalling in a mobile radio communication and a base station for a mobile radio communication system, which enable an efficient signalling of the resource assignment.

This object is achieved by a method for resource assignment signalling in a mobile radio communication system with the features of claim 1 and a base station for a mobile radio communication system with the features of claim 9. Further embodiments of the invention a subject to the dependent claims.

A basic idea of the invention is to adapt the signalling of a resource assignment, particularly resource block assignment as in 3GPP-LTE systems, depending on the number of active user equipments. This enables an efficient signalling of the resource assignment in a mobile radio communication system than using fixed length identifiers for the resource block assignment.

According to an embodiment of the invention, a method for resource assignment signalling in a mobile radio communication system is provided, wherein time-frequency resources for data transmission are structured in physical resource blocks, and wherein the method comprises the steps of
- assigning resource blocks to active user equipments,
- signalling the resource block assignment to the active user equipments, and
- adapting the signalling of the resource block assignment depending on the actual number of active user equipments.
   It should be noted that the above listed steps must not be performed in the above order. For example, the last step may be iteratively performed in a loop in order to continuously adapt the resource block assignment to any changes in the number of active user equipments. The first two steps may be for example performed in an initial phase, while the last step may be performed continuously after the initial phase.
   In a further embodiment of the invention, the signalling of the resource block assignment to the active user equipments may comprise signalling an identifier of the assigned user equipment for a resource block, and the adapting of the signalling of the resource block assignment may comprise selecting the length of the identifier depending on the actual number of active user equipments, which are running in parallel. The adapting step may be event-driven. The identifier may be for example a field at the beginning of a resource block. Typically, the identifier contains a unique identification of the user equipment, to which the respective resource block is assigned.
   The selecting of the length of the identifier may in a further embodiment of the invention comprise determining the active user equipments and adapting the length of the identifier to the determined active user equipments. For example, the identifier field may consist of a number of bits, which is sufficient for managing a certain number of active user equipments. The number of bits may now be adapted in accordance with the number of active user equipments, thus, only requiring as much capacity of the resource block as necessary for managing the active user equipments.
   According to a further embodiment of the invention, the selecting of the length of the identifier may comprise signalling an increasing of the length of the identifier to the active user equipments, when the number of active user equipments exceeds the maximum of user equipments, which can be managed with the current length of the identifier. For example, the user equipments may note that a further bit is added to the identifier field in order to manage the updated number of active user equipments. Thus, the user equipments may automatically be informed that an identifier field of a resource block increases.
   The adapting of the signalling of the resource block assignment may in a further embodiment of the invention also comprise determining the deactivating of an active user equipment and reconfiguring the signalling of the resource block assignment if the new number of active user equipments falls below a power of two. This allows to reduce the capacity required for the resource block assignment to user equipments and further increase the efficiency of the invention.
   The reconfiguring of the signalling of the resource block assignment may in an embodiment of the invention comprise assigning the vacant identifier of the deactivated user equipment to the user equipment with the highest identifier and shortening the length of the identifier.
   According to an embodiment of the invention, a Radio Resource Control -RRC - message may be signalled to the active user equipments if a reconfiguring of the identifiers of the active user equipments is required.
   According to a further embodiment of the invention, a Radio Resource Control -RRC - message may be signalled to the active user equipments if the identifier of the active user equipments can be shortened, wherein the RRC message contains the position of a symbol of the identifier, which is punctured.
   The invention provides in a further embodiment a base station for a mobile radio communication system, wherein the base station is adapted to structure time-frequency resources for data transmission in physical resource blocks and comprises
- assignment means for assigning resource blocks to active user equipments,
- signalling means for signalling the resource block assignment to the active user equipments, and
- adoption means for adapting the signalling of the resource block assignment depending on the actual number of active user equipments.

Particularly, the base station may be adapted to perform a method of the invention and as described above.

Finally, an embodiment of the invention relates to a mobile radio communication system comprising one or more base stations of the invention and described before.

These and other aspects of the invention will be apparent from and elucidated with reference to the embodiment(s) described hereinafter.

The invention will be described in more detail hereinafter with reference to exemplary embodiments. However, the invention is not limited to these exemplary embodiments.
Fig. 1 shows a flowchart of an embodiment of a method for resource assignment signalling in a mobile radio communication system according to the invention;
Fig. 2 shows an embodiment of an assignment of resource blocks in a mobile radio communication system with fixed length identifiers for user equipments;
Fig. 3 shows an embodiment of an assignment of resource blocks in a mobile radio communication system with adaptive length identifiers for user equipments according to the invention;
Fig. 4 shows a table with examples of assignments of short hand ids to user equipment identifiers before and after the activation of a new user equipment according to the invention;
Fig. 5 shows a table with examples of assignments of short hand ids to user equipment identifiers before and after the activation of a new user equipment according to the invention, wherein the length of the short hand identifier field is increased;
Fig. 6 shows a table with examples of assignments of short hand ids to user equipment identifiers before and after the deactivation of a new user equipment according to the invention, wherein the short hand ids are reconfigured und the length of the short hand identifier field is decreased by a signal update message; and
Fig. 7 shows a block diagram of an embodiment of a base station according the invention.

In the following, functional similar or identical elements may be denoted with the same reference numerals.

The invention enables a mobile radio communication system to adaptively change the size of a user equipment identification (UE id) signalling field of a resource block depending on the actual number of active UEs in the mobile radio communication system, or in a communication area such as a radio cell of the system. Signalling of the resource block assignment means that the receiving UEs need to be able to identify which resource blocks are assigned to them. This means, that in principle for each resource block an identifier (Id) for the receiving UE need to be signalled from the base station to the receiving UE. Thus, each resource block has a UE Id field. The length of this UE Id field affects obviously the signalling overhead to a large extent. The size of this UE Id depends on the number of parallel active UEs in the system that may vary strongly from only few UEs using high data-rate services up to very many UEs in the order of thousands using low-rate services, for example VoIP (Voice over Internet Protocol) users in a 20 MHz LTE system. The length of the UE id field is defined by the maximum number of parallel active UEs.

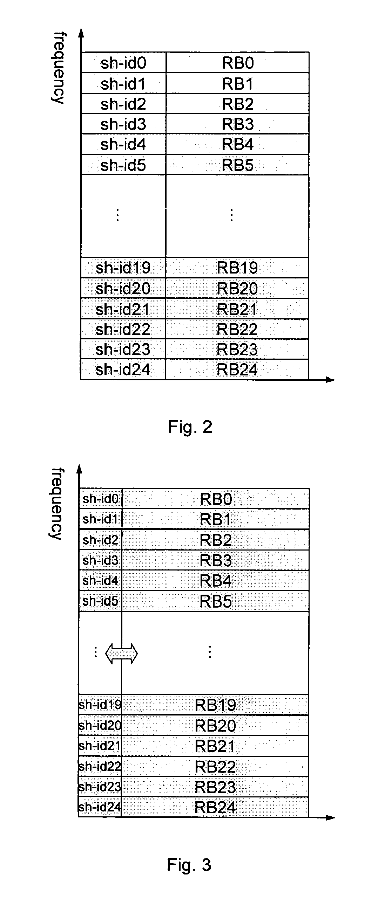

A UE id field with fixed length is a compromise between maximum number of active UEs and signalling overhead. Even if only few UEs are scheduled, a long UE Id designed to carry the maximum number of possible UEs is signalled. Fig. 2 shows a resource block assignment for 25 resource blocks per frame by using a fixed length UE Id. The UE Ids are denoted in Fig. 2 as sh-id0 to sh-id24 and have a fixed length of bits, which require some of the capacity of a resource block. The following estimation explains the overhead required for the UE Id signalling in a real 3GPP-LTE system, when a fixed length UE Id is applied.

The signalling overhead may be estimated by means of a 3GPP - LTE system using 24 subcarriers times 14 symbols per RB (Resource Block) and 25 RBs per frame. A realistic estimation of the number of parallel active UEs to be supported by the system design in a 20 MHz system is 1024 UEs or 10bit. The signalling of the sh-id (Short hand Id) has to be transmitted in a very robust way, for example by means of BPSK (Binary phase shift keying) with ½ rate coding is assumed. For each RB consisting of 336 symbols, 20 symbols are needed only to signal the sh-id, resulting in a signalling overhead of around 6%. This overhead is independent of the actual number of active UEs in the system, as the sh-id has a fixed length that is defined by the design.

Taking up the example above, the overhead can be reduced significantly by the adaptive sh-id length if less UEs are active in the system. In the case of few UEs with high data rate transmission, e.g. 64 active UEs, the sh-id length can be reduced to 7bit, resulting in an overhead of 7bit * 2 symbol/bit / 336 symbols = 4%. Fig. 3 shows an example of a resource block assignment for 25 resource blocks per frame by using an adative UE Id, i.e. an identifier with a variable lenght.

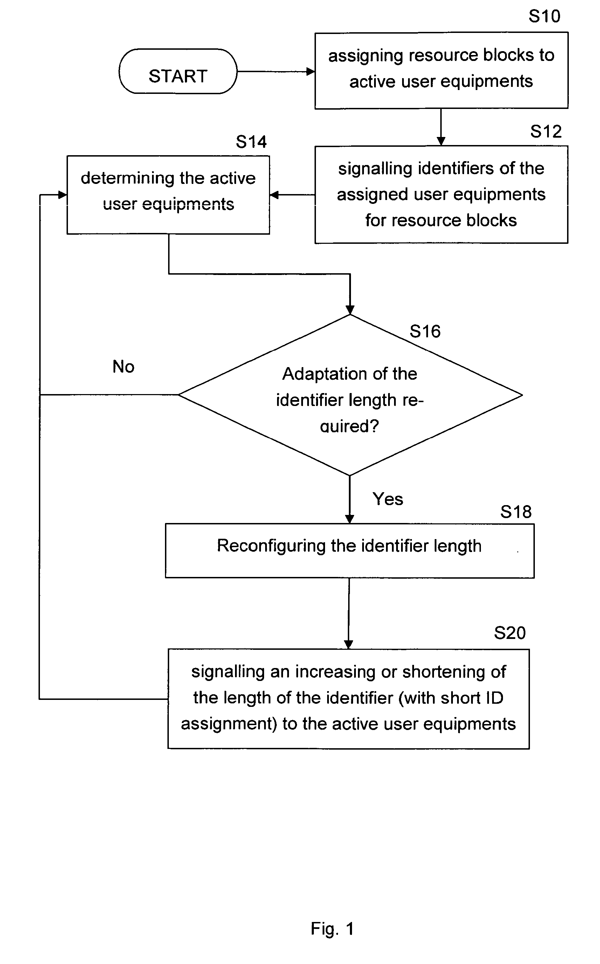

Fig. 1 shows a flowchart of a method for adapting the sh-id length, which represents the user identifier, depending the actual number of active user equipments in a mobile radio communication system. This method may be implemented in a base station of the mobile radio communication system, in hard- or software.

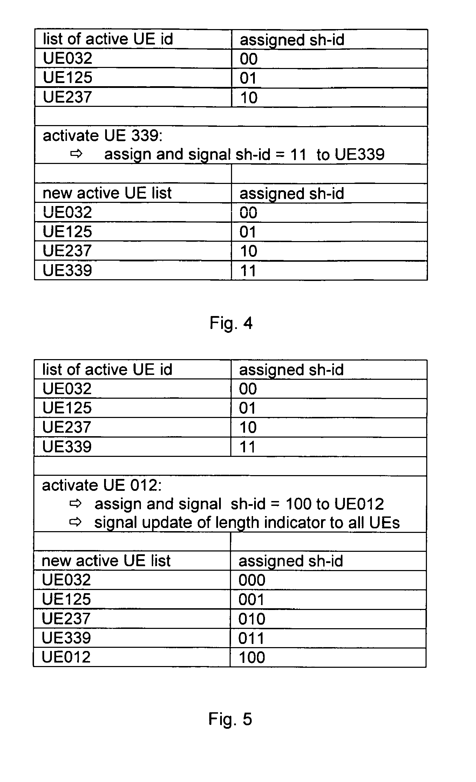

In a first step S10, the available resource blocks are assigned to the active UEs. Then, in a following step S12, the identifiers of the assigned active UEs for resource blocks are signalled to the UEs, for example it is signalled that resource block RBO is assigned to the UE with the sh-id0. The correspondence between the sh-ids used for the signalling and the real UE Ids is stored in a table, particularly in a base station communicating with the UEs in the cell covered by the base station. Continuing with step S14, the number of the active UEs for example in the cell of the base station is continuously determined. In a following step S16, it is checked whether an adaptation of the identifiere length, i.e. the length of the sh-id field in the resource blocks is required, for example because the number of active UEs exceeds the maximum number of UEs, which can be managed with the current length of the sh-id, or because the number of active UEs falls below a number of UEs, which can be managed with a sh-id with a shorter length. If an adaptation is required, the method continues with step S18, which reconfigures the identifier length, i.e. the length of the sh.id field as will be described in detail in the following with regard to Figs. 4 to 6. The updated length of the sh-id field, i.e. the increasing or shortening of the sh-id field is thereafter signalled to the active UEs in step S20. The method proceeds again with step S14 until the whole process is stopped, for example the base station is shut down. It should be noted that steps S16 till S20 may be also considered as event driven according to the active UEs, not necessarily to check the needs of reconfiguration after each resource allocation

In the following, the UE activation and the respective adaptation of the sh-id is described, as it may be performed by a method implemented in a base station of a mobile radio communication system according to the invention.

The base station controlling one cell needs to identify all UEs therein by assigning an individual UE id. However, typically not all UEs are active in parallel. When a data transmission starts, the UE state is changed from idle to active, and a short-hand UE id (sh-id) is assigned to the UE that is used for physical layer signalling. The base station maintains a mapping table from UE identification number ("UE-id") to a short-hand-UE identification number ("sh-id") and signals the new short-hand-UE-id to the UE that is activated. In the table shown Fig. 2, the UE with ids 032, 125 and 237 are active in parallel. The sh-ids 00, 01, and 10 are assigned to the active UEs as shown in the table. The length of the sh-id field is 2 Bits, so that four active UE may be managed. In the lower table shown in Fig. 2, a new UE with UE Id 339 becomes active. The method assigns the sh-id "11" to this new active UE and signals this assignment to all UEs. The table contains now for active UEs with their UE Ids and the assigned sh-ids.

If the number of active UEs exceeds a power of two, a change of the sh-UE-Id (+1bit) may signalled to all active UEs, in order to adapt the length of the sh-id to the number of active UEs. The mobile radio communication system works now with a 3-bit sh-id adapted to the number of parallel active UEs. Fig. 3 shows an upper table containing the assignment of the UE Ids of four active UEs and their assigned sh-ids. The lower table in Fig. 3 shows the UE Ids of five active UEs and their assigned sh-ids, i.e. after a further UE with a UE Id 012 was activated. The length of the sh-ids is now 3 Bits in contrast to only 2 Bits in the upper table with four active UEs in order to allow managing the five UE which are active in parallel. A new sh-id "100" with 3 Bits length is assigned and signalled to the UE with UE Id 012. Furthermore, a signal update of the length of the sh-id or the indicator of the UEs is signalled to all UEs. Upion receipt of the latter signalling, the UEs know that the length of the sh.id is now 3 Bits. Thus, the mobile radio communication system works now with an adapted user equipment identifier, namely a 3 Bit sh-id adapted to the number of parallel active UEs.

In the following, the UE de-activation and the respective adaptation of the sh-id is described, as it is be performed by the method implemented in a base station of a mobile radio communication system according to the invention.

If an arbitrary active UE should be deactivated, a sh-id becomes available (void). If the new number of active UE falls below a power of two, the base station may reconfigure the signalling by assigning the vacant sh-id to the active UE which has the highest sh-id and shortening the length of the sh-UE-id.

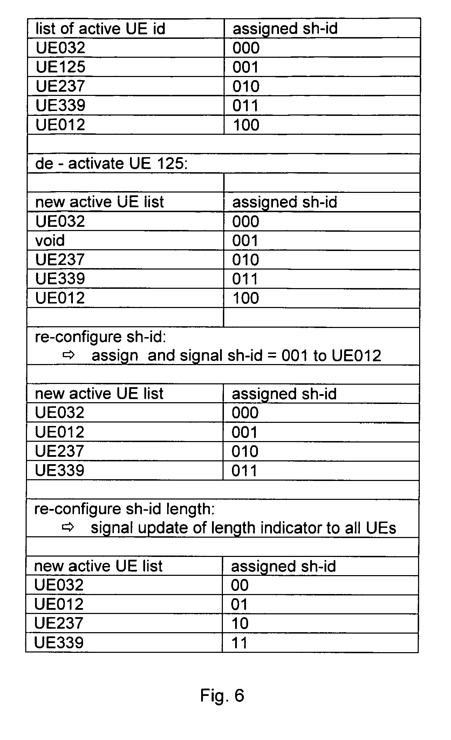

This process is explained by means of the tables shown in Fig. 6. In the first upper table, five UEs with the UE Ids 032, 125, 237, 339, and 012 are active in parallel. To each active UE, a 3 Bit sh-id is assigned as user equipment identifier. Now, UE with the UE Id 125 is deactivated. The second table shows the table entries after the deactivation of this UE. The UE Id assigned to the deactivated UE is marked as void in the table, and the sh-id "001" is assigned to the entry marked as "void". The method now reconfigures the table and the signalling as follows: firstly, the UE with the highest sh-id is determined, namely the UE with the UE Id 012 (sh-id: "100"). Secondly, the sh-id "001", which was assigned to the deactivated UE, is assigned to the UE with the highest sh-id, i.e. UE with UE Id 012. Thirdly, the most significant Bit of the sh-ids is cancelled, i.e. the length of the sh-id is shortened from 3 to 2 Bits since 2 Bits are sufficient to manage all four active UEs. The newly assigned sh-id and the shortening of the sh-id length is then signalled to all UEs. As result, an updated sh-id assignment is obtained, wherein the length of the sh-id is adapted to the number of the active UEs. The before explained process is shown in the tables from Fig. 6 from the topmost table to the bottom table. It should be noted that an ID length decrease control message can be sent from the base station in a broadcasting manner, so that no extra RRC message dedicated to each active UE may be required.

The above descriptions of the adaptation of the length of the sh-id to the number of active UEs can be generalized as the reconfiguration of the sh-id. An arbitrary combination of assgined sh-ids decreases to a number that equals a power of two can reorganised by using two types of RRC messages.
1. An explicit reconfiguration of an active UE sh-id may be needed that is signalled by an RRC message targeted to this UE.
2. Secondly, the sh-id of all active UEs can be shortened by puncturing one bit out of the sh-id of all UEs. The position of the bit to be punctured is signalled by an RRC message that is broadcasted to all active UEs.

To organise such reconfiguration, two explicit RRC messages interfacing the MAC-SAP of a base station of a mobile radio communication system can be standardized in the air interface.

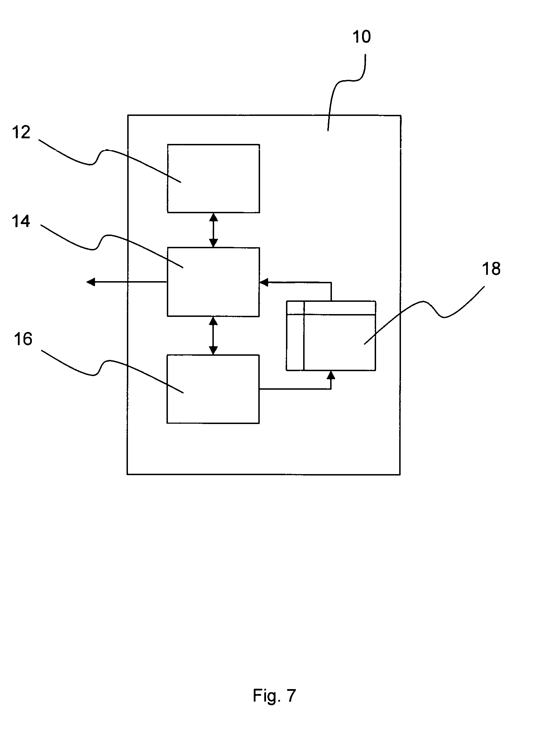

Fig. 7 shows a base station 10 for a 3GPP-LTE mobile radio communication system. The base station 10 is adapted to structure time-frequency resources for data transmission in physical resource blocks for multi-user channel adaptive scheduling. In order to perform an efficient multi-user channel adaptive scheduling with a high capacity, the base station comprises assignment means 12, which are provided and adapted for assigning resource blocks to active UEs. Furthermore, it comprises signalling means 14, which are provided and adapted for signalling the resource block assignment to the active UEs. In order to allow an adaption of the resource block assignment, the base station comprises adoption means 16, which are provided for adapting the signalling of the resource block assignment depending on the actual number of active user equipments. The adoption means 16 are particularly adapted to perform the method steps as shown in Figs 1. The current assignment of UE Ids and sh-ids as described by means of the Figs. 3 to 6 above are stored in a table 18 of the base station 10. The table entries are continuously updated by the adoption means 16 and read by the signalling means 14 in order to be signalled to the UEs by the base station 10 via RRC messages.

### List of abbreviations

- 3GPP: third Generation Partnership Project
- LTE: Long Term Evolution
- HSDPA: High Speed Downlink Packet Access
- OFDMA: Orthogonal Frequency Division Multiple Access
- QoS: Quality of Service
- SAP: Service access point
- sh-id: short - hand identification
- RRC: Radio Resource Control
- TX: transmitter
- UE: user equipment
- UE id: user equipment identification
- UMTS: Universal Mobile Communication System
- VoIP: Voice over Internet Protocol

## Claims

1. A method for resource assignment signalling in a mobile radio communication system, wherein time-frequency resources for data transmission are structured in physical resource blocks, wherein the method comprises the steps of
- assigning resource blocks to active user equipments (S10) ,
- signalling the resource block assignment to the active user equipments (S12), and
- adapting the signalling of the resource block assignment depending on the actual number of active user equipments (S14-S20).

2. The method of claim 1, wherein
- the signalling of the resource block assignment to the active user equipments comprises signalling an identifier of the assigned user equipment for a resource block (S12), and
- the adapting of the signalling of the resource block assignment comprises selecting the length of the identifier depending on the actual number of active user equipments (S14-S20).

3. The method of claim 2, wherein
- the selecting of the length of the identifier comprises determining the active user equipments (S14) and adapting the length of the identifier to the determined active user equipments (S16-S20).

4. The method of claim 3, wherein
- the selecting of the length of the identifier further comprises signalling an increasing of the length of the identifier to the active user equipments (S20), when the number of active user equipments exceeds the maximum of user equipments, which can be managed with the current length of the identifier.

5. The method of claim 2, 3 or 4, wherein
- the adapting of the signalling of the resource block assignment comprises determining the deactivating of an active user equipment and reconfiguring the signalling of the resource block assignment if the new number of active user equipments falls below a power of two.

6. The method of claim 5, wherein
- the reconfiguring of the signalling of the resource block assignment comprises assigning the vacant identifier of the deactivated user equipment to the user equipment with the highest identifier and shortening the length of the identifier.

7. The method of any of the claims 2 to 6, wherein
- a Radio Resource Control -RRC - message is signalled to the active user equipments if a reconfiguring of the identifiers of the active user equipments is required.

8. The method of any of the claims 2 to 7, wherein
- a Radio Resource Control -RRC - message is signalled to the active user equipments if the identifier of the active user equipments can be shortened, wherein the RRC message contains the position of a symbol of the identifier, which is punctured.

9. A base station (10) for a mobile radio communication system, wherein the base station (10) is adapted to structure time-frequency resources for data transmission in physical resource blocks and comprises
- assignment means (12) for assigning resource blocks to active user equipments,
- signalling means (14) for signalling the resource block assignment to the active user equipments, and
- adoption means (16) for adapting the signalling of the resource block assignment depending on the actual number of active user equipments.

10. The base station of claim 9, being adapted to perform a method of any of the claims 1 to 8.

11. A mobile radio communication system comprising one or more base stations of claim 9 or 10.
